# EUROPEAN PATENT SPECIFICATION

(11) **EP 3 753 692 B1**
(45) Date of publication and mention of the grant of the patent: **09.10.2024**
(21) Application number: 18906209.4
(22) Date of filing: 21.12.2018
(51) Int. Cl.: B26F 3/00, C08J 3/12, B26D 1/03

(54) **METHOD FOR REMOVING OBJECT TO BE REMOVED**
VERFAHREN ZUR ENTFERNUNG EINES ZU ENTFERNENDEN GEGENSTANDS
PROCÉDÉ DE RETRAIT POUR OBJET À RETIRER

(30) Priority: 16.02.2018 JP 2018025925
(43) Date of publication of application: 23.12.2020
(73) Proprietor: IHI CORPORATION, Koto-ku, Tokyo 135-8710 (JP)
(72) Inventor: SADAKI Akira, Tokyo 135-8710 (JP); MAENO Jun, Tokyo 135-8710 (JP); YAMASAKI Akito, Tokyo 135-8710 (JP); EBATA Tomoko, Tokyo 135-8710 (JP); TAKAHAMA Yuichi, Tokyo 135-8710 (JP)
(74) Representative: Marks & Clerk LLP
(86) International application number: PCT/JP2018/047220
(87) International publication number: WO 2019/159535

(56) References cited:
- JP-A- 2003 166 212
- JP-A- 2003 190 831
- JP-A- 2013 505 129
- JP-A- 2016 517 354
- JP-B1- S5 039 846
- JP-B2- 4 445 696
- US-B1- 6 715 701
- MOGGIA FABRICE ET AL: "A Versatile Tool for Decontamination, Cutting and Concrete Scabbling-11225", 31 March 2011 (2011-03-31), pages 1 - 10, XP055842183, Retrieved from the Internet <URL:http://archive.wmsym.org/2011/papers/11225.pdf> [retrieved on 20210917]
- NITROCISION LLC: "Nitrocision NitroJet", 31 December 2011 (2011-12-31), pages 1 - 6, XP055842185, Retrieved from the Internet <URL:https://ihiswt.weebly.com/uploads/4/0/7/0/40702841/nitrocision_information.pdf> [retrieved on 20210917]
- CHILSON L.: "Decontamination Using Remote-Deployed Nitrocision Technology", SAFETY ANALYSIS REPORT FOR THE WEST VALLEY MELTER PACKAGE [REFERENCES AND CALCULATIONS FOR CHAPTERS 4 THOUGH 8], 1 October 2014 (2014-10-01), pages 1 - 261, XP055842160, Retrieved from the Internet <URL:https://www.nrc.gov/docs/ML1429/ML14296A538.pdf> [retrieved on 20210917]
- IHI CORPORATION: "A Decontamination Trump Card for Reducing the Cost of Secondary Waste Processing NitroJet", IHI ENGINEERING REVIEW, 31 December 2015 (2015-12-31), pages 1 - 2, XP055842156, Retrieved from the Internet <URL:https://www.ihi.co.jp/var/ezwebin_site/storage/original/application/245c887053e731c09510c40f23f8045a.pdf> [retrieved on 20210917]
- KÄRCHER: "Spray Lances", 1 January 2017 (2017-01-01), XP055842203, Retrieved from the Internet <URL:https://s1.kaercher-media.com/asset/media/file/28384/catalog-prof-2017-p1-399.pdf> [retrieved on 20210917]

## Description

### Technical Field

The present disclosure relates to a method for removing an object to be removed.

### Background

A reinforced concrete material in which reinforcing bars are arranged inside a concrete material is widely used in a building structures. Generally, when boring of such a reinforced concrete material is performed, for example, the boring machines shown in Patent Document 1 and Patent Document 2 are used.

Patent document 3 discloses a new tool based on the use of highly pressurized liquid nitrogen and called: NitroJet^{®} (-140°C / 3500 bar) to decontaminate, cut or scabble different types of surfaces, such as metals, polymers and concrete.

Patent document 4 discloses the NitroJet system which creates and applies an ultra high-pressure (UHP) stream of liquid nitrogen for material coatings removal, cutting and cleaning without adding moisture or secondary waste. The UHP liquid 11529237-1 nitrogen stream has a density comparable to water and can be used alone or with small amounts of added abrasives. Either water soluble or insoluble abrasives can be entrained in the liquid nitrogen stream for cutting steels and for highly aggressive coating removal, profiling metal surfaces and cleaning.

Patent document 5 discloses NitroJet^{®}, for scabble concrete, removing coatings and cutting metal by spraying a target object with highly pressurized liquid nitrogen at a very low temperature. The force that is utilized is generated when the liquid nitrogen at a very low-temperature, vaporizes and expands approximately 700 times.

Patent document 6 discloses a liquid jet nozzle for forming a high velocity liquid jet from a pressurized liquid, and includes a monolithic Nitinol body having an input side and an output side. A tapering lead-in channel opening in the input side and tapers to a central web, through which extends a small diameter orifice, communicating through the web from the lead-in channel to an egress opening in the output side of the body. The orifice interacts with the high pressure liquid to shape the pressurized liquid into a narrow, high velocity liquid jet which exits the body through the egress opening. A surface layer of nickel titanium oxide on the Nitinol in the orifice provides enhanced resistance to erosion by the high pressure liquid.

Patent document 7 discloses spray lances made of high-quality stainless steel in various lengths which can be rotated through 360° under pressure. They feature ergonomic handle bowls and large hand screw connections for optimal handling and protection.

Patent document 8 discusses the deactivation activities and final conditions of the Plutonium Uranium Extraction (PUREX) facility L-9 hood. These conditions are evaluated for potential impacts of applying a polymeric barrier system (PBS) to fix the remaining contamination in the hoods.

Patent document 9 discloses a device which is at cryogenic temperature comprising a nozzle carrier device (4) comprising one or more fluid distribution nozzles (6) and a movement system (2) for moving said nozzle carrier device (4). The device is for dispensing one or more jets (5) of high pressure fluid. It further comprises at least one flexible protective housing (7) arranged around all or part of the moving system (2) for moving the nozzle carrier (4).

### Document of Related Art

### Patent Document

[Patent Document 1] Japanese Unexamined Patent Application, First Publication No. 2000-238033
[Patent Document 2] Japanese Unexamined Patent Application, First Publication No. H1-178405
[Patent Document 3] Moggia Fabrice ET AL, "A Versatile Tool for Decontamination, Cutting and Concrete Scabbling-11225", (20110331), pages 1 - 10, URL: http://archive.wmsym.org/2011/papers/11225.pdf, (20210917), XP055842183 [I] 1-7 * page 1 - page 10
[Patent Document 4] Nitrocision Llc, "Nitrocision NitroJet", (20111231), pages 1 - 6, URL:https://ihiswt.weebly.com/uploads/4/0/7/0/40702841/nitrocision_information.pdf, (20210917), XP055842185 [T] 1-7
[Patent Document 5] IHI Corporation, "A Decontamination Trump Card for Reducing the Cost of Secondary Waste Processing NitroJet", IHI Engineering Review, (20151231), pages 1 - 2, URL: https://www.ihi.co.jp/var/ezwebin_site/storage/original/application/245c887053e731c095 10c40f23f8045a.pdf, (20210917), XP055842156 [I] 1-7 * page 1 - page 2
[Patent Document 6] US Patent Application US6715701
[Patent Document 7] Kärcher, "Spray Lances", (20170101), URL: https://s1.kaercher-media.com/asset/media/file/28384/catalog-prof-2017-p1-399.pdf, (20210917), XP055842203 [A] 3,4 * page 130 - page 131
[Patent Document 8] Chilson L., "Decontamination Using Remote-Deployed Nitrocision Technology", Safety Analysis Report for the West Valley Melter Package [References and Calculations for Chapters 4 though 8], (20141001), pages 1 - 261, URL: https://www.nrc.gov/docs/ML1429/ML14296A538.pdf, (20210917), XP055842160 [A] 1 * page 1 - page 12
[Patent Document 9] Japanese Patent Application JP2016517354

### Summary

### Technical Problem

However, a reinforced concrete material may have pipes and the like buried therein in addition to the above-described reinforcing bars. That is, such a reinforced concrete material has a structure in which reinforcing bars, pipes and the like are integrated to the concrete material. When boring a reinforced concrete material, it is necessary to perform boring without damaging such reinforcing bars and pipes.

Therefore, it is necessary to identify the positions of the reinforcing bars and pipes before boring with a boring machine, which requires time and preparation prior to boring. In addition, when the boring machine unexpectedly comes into contact with reinforcing bars, pipes or the like during boring, it is difficult to change the boring angle, and it is necessary to change the boring position again and then to perform boring. Note that such a problem does not only occur in reinforced concrete materials but may similarly occur in a case where some materials are removed from a structure in which a plurality of materials are integrated.

The present disclosure is made in view of the above-described problems, and an object thereof is to easily remove an object to be removed from a structure including the object to be removed made of a material having fine holes through which a liquid can enter, and a remaining material made of a material having no fine holes through which the liquid can enter and integrated to the object to be removed.

### Solution to Problem

The present disclosure adopts the following configurations as means for solving the above problems.

A method for removing an object to be removed of a first aspect of the present disclosure is a method as defined in claim 1.

A method for removing an object to be removed of a second aspect of the present disclosure is that in the first aspect, the liquefied fluid is sprayed to advance boring of the object to be removed, and after the remaining object is exposed, a spray direction of the liquefied fluid is changed so as to avoid the remaining object.

A method for removing an object to be removed of a third aspect of the present disclosure is that in the first or second aspect, the liquefied fluid is sprayed through a nozzle unit including a tube portion, the tube portion being provided with a flow path that guides the liquefied fluid thereinside and a spray opening at a tip portion thereof.

A method for removing an object to be removed of a fourth aspect of the present disclosure is that in the third aspect, the tip portion provided with the spray opening is bent or curved and connected to a base portion of the tube portion, and a region of the tube portion including the tip portion and the base portion is provided with the flow path that guides the liquefied fluid.

A method for removing an object to be removed of a fifth aspect of the present disclosure is that in any one of the first to fourth aspects, the object to be removed is a concrete material.

A method for removing an object to be removed of a sixth aspect of the present disclosure is that in any one of the first to fourth aspects, the object to be removed is a fiber-reinforced plastic material.

A method for removing an object to be removed of a seventh aspect of the present disclosure is that in any one of the first to sixth aspects, the liquefied fluid is liquid nitrogen.

### Effects

According to the present disclosure, the expansive force when the liquefied fluid vaporizes breaks the object to be removed, thereby removing the object to be removed. The expansion rate when a liquid vaporizes is, for example, several hundred times or more. Therefore, the object to be removed can be easily broken by causing the liquefied fluid to enter the fine holes of the object to be removed and by using the expansive force of the liquefied fluid. On the other hand, since the vaporized fluid does not enter the inside of the remaining object having no fine holes through which the liquid can enter, the remaining object is not broken by the expansion of the vaporized fluid. Therefore, according to the present disclosure, it is possible to continue boring of the object to be removed without considering the position of the remaining object even when the remaining object is positioned at the spraying point. Consequently, according to the present disclosure, it is possible to easily remove the object to be removed from the structure including the object to be removed made of a material having fine holes through which a liquid can enter, and a remaining material made of a material having no fine holes through which the liquid can enter and united to the object to be removed.

### Brief Description of Drawings

FIG. 1 is a schematic diagram showing a schematic configuration of a liquid nitrogen-spraying system used in a concrete-boring method of a first embodiment of the present disclosure.
FIG. 2 is an enlarged perspective view showing a schematic configuration of a nozzle unit included in the liquid nitrogen-spraying system used in the concrete-boring method of the first embodiment of the present disclosure.
FIG. 3 is a schematic diagram explaining operations of the concrete-boring method of the first embodiment of the present disclosure.
FIG. 4 is a schematic diagram explaining operations of a concrete-boring method of a second embodiment of the present disclosure.
FIG. 5 is an enlarged perspective view showing a schematic configuration of a first modification of the nozzle unit.
FIG. 6 is an enlarged perspective view showing a schematic configuration of a grip portion included in the first modification of the nozzle unit.
FIG. 7 is an enlarged perspective view showing a schematic configuration of a modification of the grip portion included in the first modification of the nozzle unit.
FIG. 8 is an enlarged perspective view showing a schematic configuration of the modification of the grip portion included in the first modification of the nozzle unit.
FIG. 9 is an enlarged perspective view showing a schematic configuration of the modification of the grip portion included in the first modification of the nozzle unit.
FIG. 10 is an enlarged perspective view showing a schematic configuration of a second modification of the nozzle unit.
FIG. 11 is a partially enlarged perspective view showing a schematic configuration of a heat insulation portion included in the second modification of the nozzle unit.

### Description of Embodiments

Hereinafter, embodiments of a method for removing an object to be removed of the present disclosure will be described with reference to the drawings. Note that in the following embodiments, examples are described in which the present disclosure is applied to a concrete-boring method of boring a concrete material, in a concrete structure (a structure) in which the concrete material (object to be removed) and reinforcing bars (remaining object) are integrated.

### (First Embodiment)

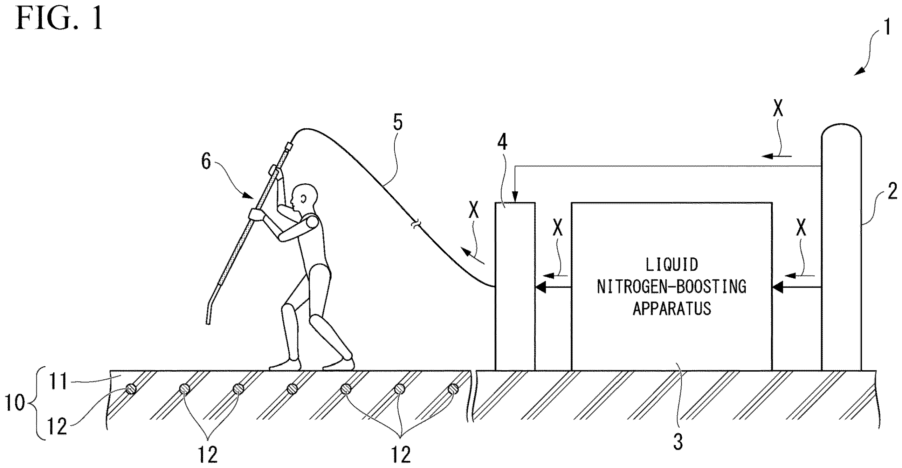

FIG. 1 is a schematic diagram showing a schematic configuration of a liquid nitrogen-spraying system 1 used in a concrete-boring method of this embodiment. As shown in this diagram, the liquid nitrogen-spraying system 1 includes a storage tank 2, a liquid nitrogen-boosting apparatus 3, a chiller 4, a flexible tube 5, and a nozzle unit 6.

The storage tank 2 is a pressure tank that stores liquid nitrogen X and is connected to the liquid nitrogen-boosting apparatus 3 and the chiller 4. Note that the liquid nitrogen-spraying system 1 may be configured to be supplied with the liquid nitrogen X from the outside without including the storage tank 2.

The liquid nitrogen-boosting apparatus 3 boosts in pressure the liquid nitrogen X supplied from the storage tank 2 up to a constant spray pressure. For example, the liquid nitrogen-boosting apparatus 3 includes a booster pump that pumps the liquid nitrogen X, a pre-pump that primarily boosts in pressure the liquid nitrogen X sent from the booster pump, an intensifier pump that secondarily boosts in pressure the primarily boosted liquid nitrogen X up to the spray pressure, and the like. The liquid nitrogen-boosting apparatus 3 is connected to the chiller 4.

The chiller 4 is a heat exchanger that cools the liquid nitrogen X increased in temperature by being boosted in pressure by the liquid nitrogen-boosting apparatus 3 to a spray temperature by heat exchange with liquid nitrogen X supplied from the storage tank 2. The chiller 4 is connected to one end of the flexible tube 5.

For example, the liquid nitrogen-boosting apparatus 3 and the chiller 4 are integrated into one unit and are placed on one moving carriage. The liquid nitrogen-boosting apparatus 3 and the chiller 4 that are integrated into one unit and if necessary, the storage tank 2 are placed on the moving carriage, whereby it is possible to easily move the liquid nitrogen-spraying system 1. Note that the liquid nitrogen-boosting apparatus 3 and the chiller 4 do not necessarily have to be integrated into one unit. For example, the liquid nitrogen-boosting apparatus 3 and the chiller 4 may be arranged separately from each other, and the chiller 4 may be arranged close to the nozzle unit 6. When adopting this configuration, it is possible to limit the liquid nitrogen X cooled by the chiller 4 from increasing in temperature before reaching the nozzle unit 6 and to improve the jet force of the liquid nitrogen X sprayed from the nozzle unit 6.

The flexible tube 5 is a tube having flexibility in which one end thereof is connected to the chiller 4 and the other end thereof is connected to the nozzle unit 6 and guides the boosted liquid nitrogen X from the chiller 4 to the nozzle unit 6. The flexible tube 5 has pressure resistance and heat insulation and guides, to the nozzle unit 6, the liquid nitrogen X supplied from the chiller 4 while minimizing the decrease in pressure and temperature of the liquid nitrogen X.

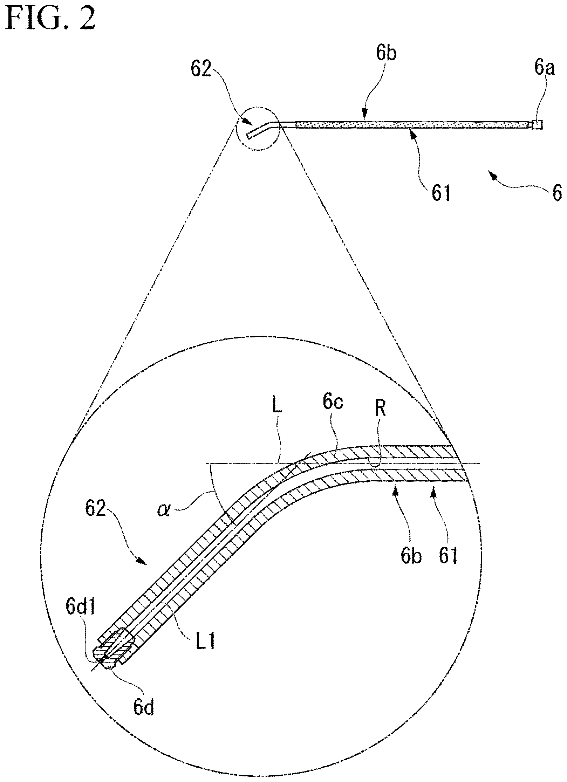

FIG. 2 is an enlarged perspective view showing a schematic configuration of the nozzle unit 6. As shown , the nozzle unit 6 includes a joint portion 6a and a tube portion 6b. The joint portion 6a is a portion to which the flexible tube 5 is connected, and a flow path (not shown) is formed inside of the joint portion 6a.

The tube portion 6b includes a tubular barrel portion 6c inside of which a flow path R is formed, and an orifice portion 6d fixed to the tip portion of the barrel portion 6c. The barrel portion 6c is, for example, a heat-insulated long pipe-shaped portion that guides the liquid nitrogen X from the joint portion 6a to the orifice portion 6d through the flow path R formed in the longitudinal direction of the barrel portion 6c. The barrel portion 6c is a portion held by an operator when the liquid nitrogen X is sprayed. The orifice portion 6d is fixed to the tip of the barrel portion 6c and is provided with a spray opening 6d1 that sprays the liquid nitrogen X forward. The spray opening 6d1 is joined to the flow path R of the barrel portion 6c, and the liquid nitrogen X flowing through the flow path R is sprayed from the spray opening 6d1 to the outside of the tube portion 6b.

The tube portion 6b as described above includes a straight tube-shaped base portion 61 and a tip portion 62 provided with the orifice portion 6d. The base portion 61 is configured of a portion on a proximal end side (on the joint portion 6a-side) of the barrel portion 6c and linearly extends along a linear central axis L. The tip portion 62 includes the spray opening 6d1 by being provided with the orifice portion 6d and sprays the liquid nitrogen X. As shown in FIG. 2, the tip portion 62 is curved and connected to the base portion 61 such that the spray opening 6d1 opens toward an area away from the base portion 61 and the spray direction of the liquid nitrogen X inclines with respect to the central axis L of the base portion 61. More specifically, a region of the tip portion 62 close to the base portion 61 is curved at a constant radius of curvature, a region thereof close to the spray opening 6d1 is formed to be linear, and the region thereof close to the base portion 61 and the region thereof close to the spray opening 6d1 are integrally connected together such that the central axis L1 of the region thereof close to the spray opening 6d1 forms an angle α (about 45° in this embodiment) less than 90° with respect to the central axis L of the base portion 61.

In this way, the nozzle unit 6 includes the tube portion 6b in which the tip portion 62 including the spray opening 6d1 is curved and connected to the base portion 61 and which is provided with the flow path R that guides the liquid nitrogen X to the base portion 61 and the tip portion 62. In addition, the tube portion 6b includes the base portion 61 formed into a straight tube shape, and the tip portion 62 that sprays the liquid nitrogen X in a direction inclined with respect to the central axis L of the base portion 61.

In the liquid nitrogen-spraying system 1 including the nozzle unit 6 described above, the liquid nitrogen X is supplied from the storage tank 2 to the liquid nitrogen-boosting apparatus 3. The liquid nitrogen X is boosted by the liquid nitrogen-boosting apparatus 3 up to the spray pressure and thereafter is supplied to the chiller 4. The liquid nitrogen X supplied from the liquid nitrogen-boosting apparatus 3 to the chiller 4 is cooled by heat exchange with liquid nitrogen X supplied from the storage tank 2 to the chiller 4 through another flow path. The liquid nitrogen X cooled by the chiller 4 is supplied to the nozzle unit 6 through the flexible tube 5. The liquid nitrogen X supplied to the nozzle unit 6 flows through the flow path R inside the tube portion 6b and is sprayed outward from the spray opening 6d1.

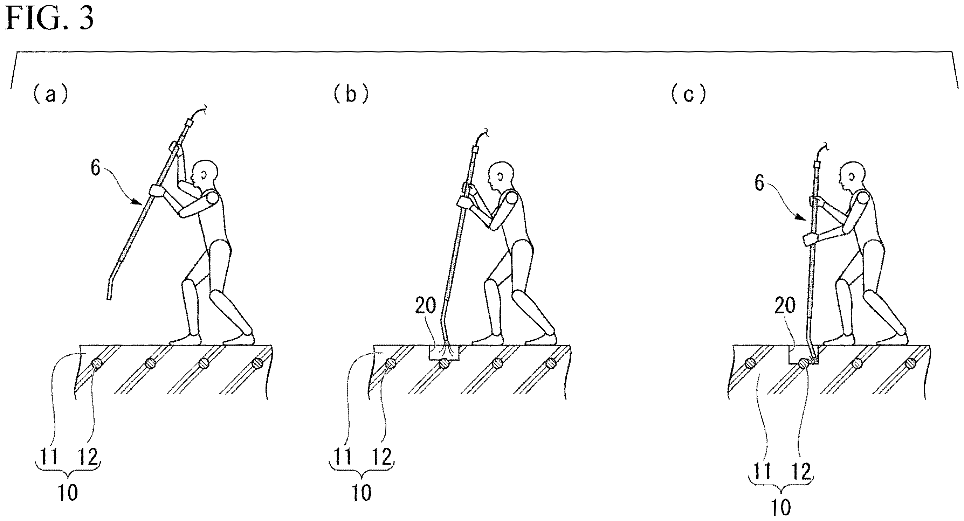

FIG. 3 is a schematic diagram explaining the concrete-boring method of this embodiment. As shown in FIG. 3, a concrete structure 10 has a structure in which a concrete material 11 and reinforcing bars 12 buried in the concrete material 11 are united. As it is well known, the concrete material 11 is a material having porous structure (a large number of fine holes). That is, the concrete material 11 is made of a material having fine holes through which a liquid can enter. On the other hand, the reinforcing bars 12 are formed of steel and have no porous structure. That is, the reinforcing bars 12 are made of a material having no fine holes through which the liquid can enter. In the concrete-boring method described in this embodiment, the concrete structure 10 is applied with the boring, thereby forming a hole 20.

First, the operator holds the nozzle unit 6 as shown in part (a) of FIG. 3. Here, the operator holds the nozzle unit 6 such that the tip portion 62 of the nozzle unit 6 faces downward. At this time, it is only necessary for the operator to know a position where the hole 20 is to be formed and is not necessary to know the positions of the reinforcing bars 12 buried in the concrete material 11.

Next, the operator brings the tip portion 62 of the nozzle unit 6 into contact with the surface of the concrete material 11 and causes the liquid nitrogen X to be sprayed. The liquid nitrogen X sprayed at this time enters the inside of the porous structure of the concrete material 11 and vaporizes and expands inside the porous structure. In other words, the liquid nitrogen X is sprayed onto the concrete material 11 so as to enter into the porous structure of the concrete material 11. As a result, a region of the concrete material 11 into which the liquid nitrogen X has entered is broken, so that the hole 20 is formed. Then, the operator gradually expands and digs the hole 20 while changing the attitude of the nozzle unit 6.

The spray and the spray position of the liquid nitrogen X may be maintained until the liquid nitrogen X that has entered the porous structure of the concrete material 11 vaporizes after the liquid nitrogen X is sprayed onto the concrete material 11. In this case, after the liquid nitrogen X has entered into the porous structure of the concrete material 11, newly sprayed liquid nitrogen X closes the openings of the porous structure, and the expansive force when the liquid nitrogen X inside the porous structure vaporizes can be appropriately applied to the inner surfaces of the porous structure, whereby it is possible to efficiently break the porous structure and part of the concrete material 11 in the vicinity thereof.

Here, as shown in part (b) of FIG. 3, when the reinforcing bars 12 are exposed at the bottom of the hole 20, the operator visually confirms that the reinforcing bars 12 are exposed at the bottom of the hole 20 and thereafter changes the attitude of the nozzle unit 6 such that the nozzle unit 6 does not come into contact with the reinforcing bars 12 as shown in part (c) of FIG. 3. That is, in this embodiment, the liquid nitrogen X is sprayed to advance the boring of the concrete material 11, and after the reinforcing bars 12 are exposed, the spray direction of the liquid nitrogen X is changed so as to avoid the reinforcing bars 12. Even in such a case, the liquid nitrogen X does not enter into the reinforcing bars 12 having no porous structure. Therefore, even if the liquid nitrogen X is sprayed onto the reinforcing bars 12, the reinforcing bars 12 are not broken unlike the concrete material 11. That is, in the concrete-boring method of this embodiment, the concrete material 11 is broken and removed by being sprayed with the liquid nitrogen X, but the reinforcing bars 12 remain even if the liquid nitrogen X is sprayed thereon to. Consequently, when boring of the hole 20 is continued, the concrete material 11 is removed, but the reinforcing bars 12 remain without damage.

According to the concrete-boring method of this embodiment as described above, the expansive force when the liquid nitrogen X vaporizes breaks the concrete material 11, thereby removing the concrete material 11. The expansion rate when a liquid vaporizes is, for example, several hundred times or more. Therefore, it is possible to easily break the concrete material 11 by causing the liquid nitrogen X to enter the fine holes of the concrete material 11 and using the expansive force of the liquid nitrogen X. On the other hand, since the vaporized fluid does not enter into the reinforcing bars 12 having no fine holes through which the liquid can enter, the expansion of the vaporized fluid does not break the reinforcing bars 12. Therefore, according to the concrete-boring method of this embodiment, it is possible to continue boring of the concrete material 11 even if the reinforcing bars 12 are positioned at the spray point without considering the positions of the reinforcing bars 12. Consequently, according to the concrete-boring method of this embodiment, it is possible to easily remove the concrete material 11 from the concrete structure 10 including the concrete material 11 made of a material having fine holes through which a liquid can enter, and the reinforcing bars 12 made of a material having no fine holes through which the liquid can enter and united to the concrete material 11.

For example, in a water jet apparatus, boring of the concrete material 11 can be performed by spraying water. However, in a case of the water jet apparatus, since the concrete material 11 is broken by the impact force when water collides with the concrete material 11, when the water collides with the reinforcing bars 12, the surfaces of the reinforcing bars 12 are subjected to damage to no small extent. On the other hand, according to the concrete-boring method of this embodiment, the hole 20 can be formed in a state where the reinforcing bars 12 are subjected to no damage.

Furthermore, in a case of the water jet apparatus, since the water after being sprayed onto the concrete material 11 remains in the work area, the water has to be posterior treated if necessary. On the other hand, according to the concrete-boring method of this embodiment, the sprayed liquid nitrogen X vaporizes. Therefore, the liquid nitrogen X does not remain in the work area, and the posterior treatment for the liquid nitrogen X does not have to be performed. Consequently, according to the concrete-boring method of this embodiment, it is possible to reduce the work load for boring concrete.

In the concrete-boring method of this embodiment, the liquid nitrogen X is sprayed to advance boring of the concrete material 11, and after the reinforcing bars 12 are exposed, the spray direction of the liquid nitrogen X is changed so as to avoid the reinforcing bars 12. According to the concrete-boring method of this embodiment, since the reinforcing bars 12 are not damaged by the spray of the liquid nitrogen X, after the reinforcing bars 12 are exposed and are confirmed through visual observation or the like, the spray direction of the liquid nitrogen X can be changed. Therefore, it is not necessary to know the positions of the reinforcing bars 12 in advance, and the work efficiency of forming the hole 20 is significantly improved.

In the concrete-boring method of this embodiment, the tube portion 6b of the nozzle unit 6 includes the tip portion 62 that is curved and connected to the base portion 61, and the tip portion 62 includes the spray opening 6d1. Therefore, for example, the base portion 61 is rotated around the central axis L, whereby the spray opening 6d1 can be easily moved in a circumferential direction viewed from the base portion 61.

In the concrete-boring method of this embodiment, the tube portion 6b of the nozzle unit 6 includes the base portion 61 formed into a straight tube shape, and the tip portion 62 that sprays the liquid nitrogen X in a direction inclined with respect to the central axis L of the base portion 61. Therefore, the straight tube-shaped base portion 61 is rotated around the central axis L, whereby the spray direction of the liquid nitrogen X can be easily changed in the circumferential direction, and it is possible to change the spray direction of the liquid nitrogen X with the minimum necessary operation.

In the concrete-boring method of this embodiment, the spray opening 6d1 of the tip portion 62 of the nozzle unit 6 is opened toward an area away from the base portion 61. For example, although it is possible to incline the spray opening 6d1 with respect to the central axis L and to direct it toward the base portion 61, by causing the spray opening 6d1 to open toward an area away from the base portion 61, the liquid nitrogen X can be easily sprayed forward of the nozzle unit 6.

### (Second Embodiment)

Next, a second embodiment of the present disclosure will be described. Note that the descriptions of the second embodiment equivalent to those of the first embodiment will be omitted or simplified.

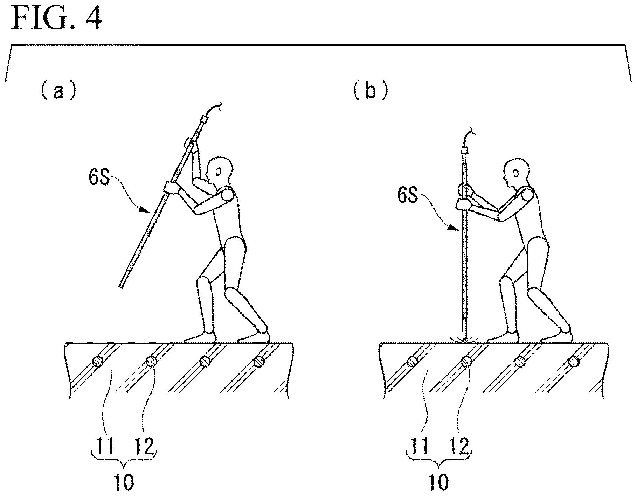

In the above first embodiment, the configuration in which boring of the concrete material 11 is perforated using the nozzle unit 6 including the tip portion 62 that is curved and connected to the base portion 61 has been described. On the other hand, in a concrete-boring method of this embodiment, as shown in FIG. 4, boring of the concrete material 11 is perforated using a straight tube-shaped nozzle unit 6S.

In such a case, first, as shown in part (a) of FIG. 4, the operator holds the nozzle unit 6S. Here, the operator holds the nozzle unit 6S such that the tip portion 62 of the nozzle unit 6S faces downward. Then, as shown in part (b) of FIG. 4, the operator brings the tip portion 62 of the nozzle unit 6 into contact with the surface of the concrete material 11 and causes the liquid nitrogen X to be sprayed.

In the concrete-boring method of this embodiment, it is also possible to remove only the concrete material 11 using the expansive force when the liquid nitrogen X vaporizes and to leave the reinforcing bars 12, and thus it is possible to perform boring of the concrete material 11 without knowing the positions of the reinforcing bars 12.

### (First Modification of Nozzle Unit)

Next, a first modification of the nozzle unit will be described. Note that the descriptions of the first modification equivalent to those of the first embodiment will be omitted or simplified.

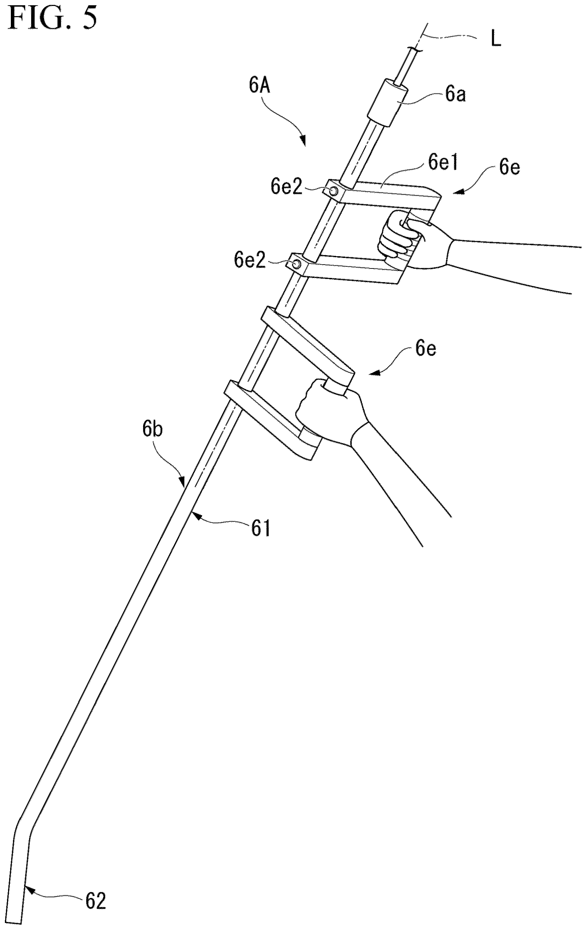

FIG. 5 is an enlarged perspective view showing a schematic configuration of a nozzle unit 6A. As shown in this view, the nozzle unit 6A includes grip portions 6e in addition to the configuration of the nozzle unit 6 of the first embodiment.

The grip portions 6e are attached to the tube portion 6b and protrude from the tube portion 6b outward in a radial direction of the tube portion 6b. As shown in FIG. 5, a plurality (two in this modification) of grip portions 6e are attached to the base portion 61 (linear portion) of the tube portion 6b and are provided separately from each other in the extending direction of the base portion 61 (in the extending direction of the flow path R inside the base portion 61).

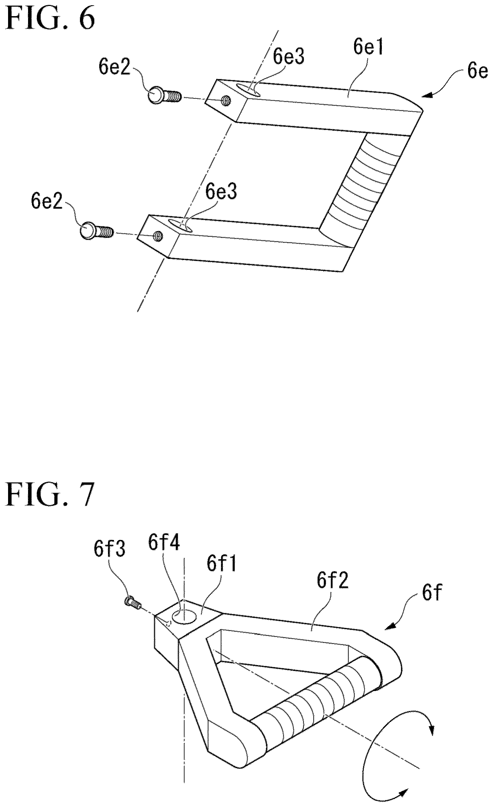

FIG. 6 is an enlarged perspective view showing a schematic configuration of the grip portion 6e. As shown in this view, the grip portion 6e includes a body portion 6e1 and lock portions 6e2. As shown in FIG. 6, the body portion 6e1 is a substantially C-shaped portion, and two ends thereof are provided with through-holes 6e3 concentric with each other. Each of these through-holes 6e3 has a diameter slightly greater than the outer diameter of the base portion 61 of the tube portion 6b, and the base portion 61 is inserted therethrough. In addition, each of the two ends of the body portion 6e1 is provided with a screw hole into which the lock portion 6e2 is screwed. Each of these screw holes is joined to the through-hole 6e3 from outside in the radial direction of the through-hole 6e3. As a result, the tip portion of the lock portion 6e2 screwed into the screw hole can come into contact with the tube portion 6b inserted through the through-hole 6e3.

The lock portion 6e2 is a screw portion screwed into the above-described screw hole provided in the body portion 6e1 and is moved in a direction along the central axis thereof (in the radial direction of the base portion 61 of the tube portion 6b) by rotating the lock portion 6e2 around the central axis. When the lock portion 6e2 is rotated in the tightening direction (in a direction for moving inward in the radial portion of the base portion 61 of the tube portion 6b), the tip portion thereof comes into contact with the base portion 61 of the tube portion 6b and prevents the movement of the body portion 6e1 with respect to the base portion 61 by frictional force.

The grip portion 6e can be moved in the extending direction (the longitudinal direction) of the base portion 61 of the tube portion 6b by loosening the lock portions 6e2. In addition, the grip portion 6e is fixed to the tube portion 6b by tightening the lock portions 6e2.

As shown in FIG. 5, the grip portion 6e arranged on the tip portion side of the tube portion 6b and the other grip portion 6e arranged on the joint portion 6a-side thereof may be fixed so as to protrude in different directions from the center of the tube portion 6b. Thereby, for example, the grip portion 6e arranged on the tip portion side of the tube portion 6b can be protruded toward the left hand of the operator, and the other grip portion 6e arranged on the joint portion 6a-side thereof can be protruded toward the right hand of the operator.

The nozzle unit 6A includes the grip portions 6e that are attached to the tube portion 6b and protrude from the tube portion 6b outward in the radial direction. Therefore, the operator can operate the nozzle unit 6A while holding the grip portions 6e, and thus the handleability of the nozzle unit 6A can be improved.

In the nozzle unit 6A, the plurality of grip portions 6e are provided in the base portion 61 of the tube portion 6b so as to be separated from each other in the extending direction of the flow path R. Therefore, the operator can stably hold the nozzle unit 6A with both hands, and the workability can be improved.

In the nozzle unit 6A, the two grip portions 6e protrude in different directions from the center of the tube portion 6b. Therefore, for example, the operator can hold the nozzle unit 6A with both left and right hands from both sides thereof, and the workability can be further improved.

In the nozzle unit 6A, the grip portions 6e are attached so as to be movable in the extending direction of the tube portion 6b. Therefore, the positions of the grip portions 6e can be adjusted according to the work position or the physique of the operator, and the workability can be further improved.

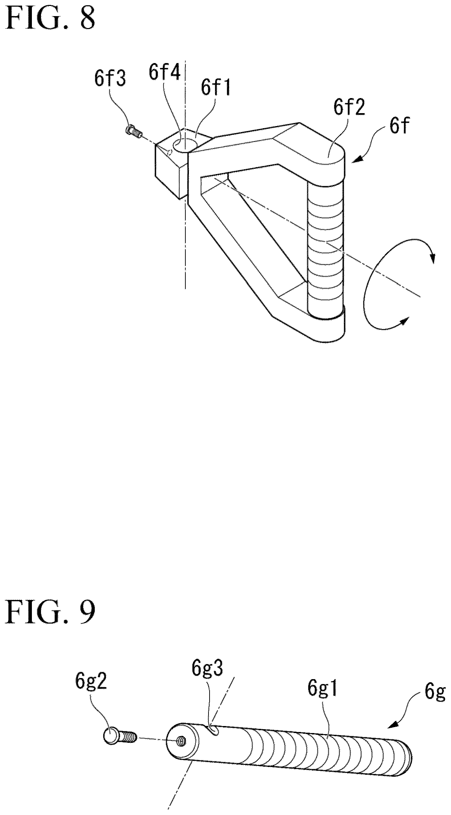

In addition, as shown in FIGS. 7 and 8, instead of the grip portion 6e, a configuration including a grip portion 6f in which a body portion 6f2 is rotatable can be adopted. The grip portion 6f shown in FIGS. 7 and 8 includes a support portion 6f1, the body portion 6f2, and a lock portion 6f3.

The support portion 6f1 includes a through-hole 6f4 having a diameter slightly greater than the outer diameter of the base portion 61 of the tube portion 6b, and the base portion 61 is inserted through the through-hole 6f4. As shown in FIGS. 7 and 8, the support portion 6f1 rotatably supports the body portion 6f2. In addition, the support portion 6f1 is provided with a screw hole into which the lock portion 6f3 is screwed. The screw hole is joined to the through-hole 6f4 from outside in the radial direction of the through-hole 6f4. Thereby, the tip portion of the lock portion 6f3 screwed into the screw hole can come into contact with the tube portion 6b inserted through the through-hole 6f4.

The body portion 6f2 is a substantially triangular annular portion, and one of the apexes thereof is rotatably connected to the support portion 6f1. The body portion 6f2 is rotatable around a rotational central axis that is orthogonal to the central axis L (refer to FIG. 2) of the base portion 61 of the tube portion 6b.

The lock portion 6f3 is a screw portion screwed into the above-described screw hole provided in the support portion 6f1 and is moved in a direction along the central axis thereof (in the radial direction of the base portion 61 of the tube portion 6b) by being rotated around the central axis. When the lock portion 6f3 is rotated in the tightening direction (in a direction for moving inward in the radial portion of the base portion 61 of the tube portion 6b), the tip portion thereof comes into contact with the base portion 61 of the tube portion 6b and prevents the movement of the body portion 6f2 with respect to the base portion 61 by frictional force.

The grip portion 6f can be moved in the extending direction (the longitudinal direction) of the base portion 61 of the tube portion 6b by loosening the lock portion 6f3. In addition, the grip portion 6f is fixed to the tube portion 6b by tightening the lock portion 6f3.

According to the grip portion 6f described above, since the body portion 6f2 is rotatable with respect to the support portion 6f1, the operator can arbitrarily adjust the rotation angle of the body portion 6f2 with respect to the support portion 6f1, and thus the handleability thereof can be improved.

Furthermore, as shown in FIG. 9, instead of the grip portion 6e, a configuration including a grip portion 6g that includes a rod-shaped body portion 6g1 and a lock portion 6g2. One end of the body portion 6g1 is provided with a concentric through-hole 6g3. The through-hole 6g3 has a diameter slightly greater than the outer diameter of the base portion 61 of the tube portion 6b, and the base portion 61 is inserted therethrough. The end of the body portion 6g1 is provided with a screw hole into which the lock portion 6g2 is screwed. The screw hole is joined to the through-hole 6g3 from outside in the radial direction of the through-hole 6g3. Thereby, the tip portion of the lock portion 6g2 screwed into the screw hole can come into contact with the tube portion 6b inserted through the through-hole 6g3.

The lock portion 6g2 is a screw portion screwed into the above-described screw hole provided in the body portion 6g1 and is moved in a direction along the central axis thereof (in the radial direction of the base portion 61 of the tube portion 6b) by being rotated around the central axis. When the lock portion 6g2 is rotated in the tightening direction (in a direction for moving inward in the radial portion of the base portion 61 of the tube portion 6b), the tip portion thereof comes into contact with the base portion 61 of the tube portion 6b and prevents the movement of the body portion 6g1 with respect to the base portion 61 by frictional force.

The grip portion 6g can be moved in the extending direction (the longitudinal direction) of the base portion 61 of the tube portion 6b by loosening the lock portion 6g2. In addition, the grip portion 6g is fixed to the tube portion 6b by tightening the lock portion 6g2.

### (Second Modification of Nozzle Unit)

Next, a second modification of the nozzle unit will be described. Note that the descriptions of the second modification equivalent to those of the first embodiment of the present disclosure will be omitted or simplified.

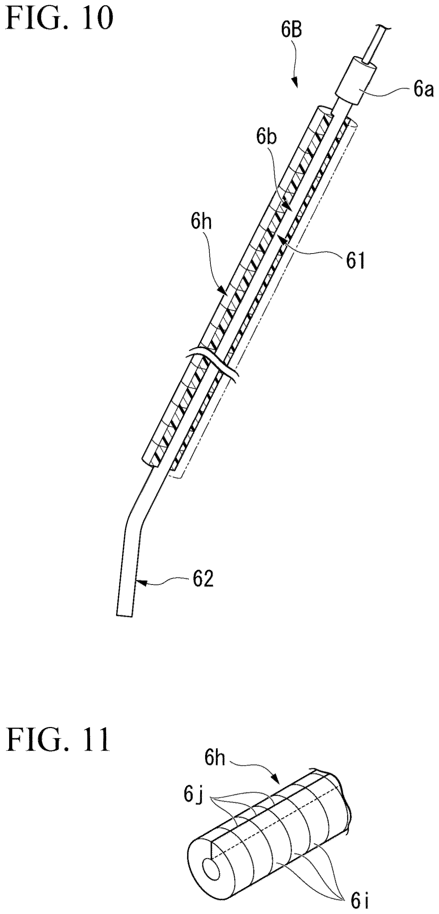

FIG. 10 is an enlarged perspective view showing a schematic configuration of a nozzle unit 6B. As shown in this view, the nozzle unit 6B includes a heat insulation portion 6h in addition to the configuration of the nozzle unit 6 of the first embodiment.

The heat insulation portion 6h is fixed to the tube portion 6b so as to cover the circumferential surface of the base portion 61 of the tube portion 6b. That is, the nozzle unit 6B includes the heat insulation portion 6h that is fixed to the tube portion 6b and that covers the flow path R from outside in the radial direction. The heat insulation portion 6h is a component that prevents the cold heat of the liquid nitrogen flowing through the flow path R of the tube portion 6b from reaching the operator and is formed of, for example, a foamed plastic material.

FIG. 11 is a partially enlarged perspective view showing a schematic configuration of the heat insulation portion 6h included in the nozzle unit 6B. As shown in this view, the heat insulation portion 6h is configured of a plurality of heat insulation blocks 6i arranged continuously in the extending direction of the tube portion 6b. Each of the heat insulation blocks 6i has an annular shape having a central opening through which the tube portion 6b is inserted and has a slit 6j extending from the outer peripheral surface to the central opening of the heat insulation block 6i. The slit 6j is a part through which the tube portion 6b passes when the heat insulation block 6i is attached to and detached from the tube portion 6b. The slit 6j can be expanded by elastically deforming the heat insulation block 6i and allows the tube portion 6b to pass therethrough in the expanded state.

According to the nozzle unit 6B described above, by attaching and detaching the heat insulation block 6i, the region of the tube portion 6b that the heat insulation portion 6h covers can be changed. That is, according to the nozzle unit 6B, the heat insulation portion 6h can be divided in the extending direction of the tube portion 6b.

Hereinbefore, the embodiments of the present disclosure has been described with reference to the drawings, but the present disclosure is not limited to the above embodiments. The shapes, combinations, and the like of the components shown in the above-described embodiments are examples, and various modifications can be adopted based on design requirements and the like within the scope of the present disclosure.

For example, in the above embodiments, examples have been described in which the present disclosure is applied to the concrete-boring method of boring the region of the concrete material 11 in the concrete structure 10 (the structure) in which the concrete material 11 (the object to be removed) and the reinforcing bars 12 (the remaining object) are united. However, the present disclosure is not limited to this. For example, the present disclosure can also be applied to a method for removing a fiber-reinforced plastic material (an object to be removed) from a metal pipe (a remaining object). For example, if the fiber-reinforced plastic material has fine holes such as cracks or porous structures through which the liquid nitrogen X can enter, the liquid nitrogen X that has entered the fine holes vaporizes and expands, thereby breaking the fiber-reinforced plastic material, and thus it is also possible to remove the fiber-reinforced plastic material.

The present disclosure is not limited to the concrete material 11 or the fiber-reinforced plastic material but can be applied to the removal of a material having fine holes (including fine gaps) through which a liquid can enter. In a case where the material having such fine holes is united to another material having no fine holes, by the present disclosure, it is possible to leave the other material having no fine holes without damage and to remove only the material having the fine holes.

In the above embodiments, the configuration using the liquid nitrogen as the liquefied fluid that vaporizes and expands after spraying has been described. However, the present disclosure is not limited to this. For example, liquid carbon dioxide or liquid helium can be used for the liquefied fluid.

In the first embodiment, the configuration in which the tip portion 62 of the tube portion 6b is curved and connected to the base portion 61 has been described. However, the present disclosure is not limited to this, and it is also possible to adopt a configuration in which the tip portion 62 is bent and connected to the base portion 61 in the tube portion 6b.

In the above embodiments, the configuration of the concrete structure 10 in which the concrete material 11 and the reinforcing bars 12 are united has been described. However, for example, the concrete structure 10 may include a metal pipe. In such a case, the metal pipe is also the remaining object.

In the above embodiments, the configuration of boring the concrete material 11 downward has been described. However, the present disclosure is not limited to this. For example, the present disclosure can be applied to a method of horizontally boring the concrete material 11. In such a case, the operator horizontally presses the tip portion 62 against the side surface of the concrete structure 10 and causes the liquid nitrogen X to be sprayed, thereby boring the concrete material 11.

### Industrial Applicability

The present disclosure can be applied to a method for removing an object to be removed from a structure including the object to be removed and a remaining object.

### Description of Reference Signs

1 liquid nitrogen-spraying system
2 storage tank
3 liquid nitrogen-boosting apparatus
4 chiller
5 flexible tube
6 nozzle unit
6a joint portion
6A nozzle unit
6b tube portion
6B nozzle unit
6c barrel portion
6d orifice portion
6d1 spray opening
6e grip portion
6e1 body portion
6e2 lock portion
6e3 through-hole
6f grip portion
6f1 support portion
6f2 body portion
6f3 lock portion
6f4 through-hole
6g grip portion
6g1 body portion
6g2 lock portion
6g3 through-hole
6h heat insulation portion
6i heat insulation block
6j slit
6S nozzle unit
10 concrete structure (structure)
11 concrete material (object to be removed)
12 reinforcing bar (remaining object)
20 hole
61 base portion
62 tip portion
L central axis
L1 central axis
R flow path
X liquid nitrogen (liquefied fluid)

## Claims

1. A method for removing an object to be removed in which an object to be removed (11) is removed from a structure (10) including the object to be removed (11) made of a material having porous structure through which a liquid can enter, and a remaining object (12) made of a material having no porous structure through which the liquid can enter and united to the object to be removed (11), the method for removing an object to be removed comprising:
spraying a liquefied fluid (X) that vaporizes and expands after spraying onto the object to be removed (11) so as to make the liquefied fluid (X) enter the porous structure of the object to be removed (11),
**characterized in that**
a spray and a spray position of the liquefied fluid (X) are maintained until the liquefied fluid (X) that has entered the porous structure of the object to be removed (11) vaporizes after the liquefied fluid (X) is sprayed onto the object to be removed (11), a newly sprayed liquefied fluid (X) closes openings of the porous structure, and an expansive force when the liquefied fluid (X) inside the porous structure vaporizes is applied to inner surfaces of the porous structure, thereby breaking the porous structure and part of the object to be removed (11) in the vicinity thereof.

2. The method for removing an object to be removed according to claim 1, wherein the liquefied fluid (X) is sprayed to advance boring of the object to be removed (11), and after the remaining object (12) is exposed, a spray direction of the liquefied fluid (X) is changed so as to avoid the remaining object (12).

3. The method for removing an object to be removed according to claim 1 or 2, wherein the liquefied fluid (X) is sprayed through a nozzle unit (6, 6A, 6B, 6S) including a tube portion (6b), the tube portion (6b) being provided with a flow path (R) that guides the liquefied fluid (X) thereinside and a spray opening (6d1) at a tip portion (62) thereof.

4. The method for removing an object to be removed according to claim 3, wherein the tip portion (62) provided with the spray opening (6d1) is bent or curved and connected to a base portion (61) of the tube portion (6b), and a region of the tube portion (6b) including the tip portion (62) and the base portion (61) is provided with the flow path (R) that guides the liquefied fluid (X).

5. The method for removing an object to be removed according to any one of claims 1 to 4, wherein the object to be removed (11) is a concrete material.

6. The method for removing an object to be removed according to any one of claims 1 to 4, wherein the object to be removed (11) is a fiber-reinforced plastic material.

7. The method for removing an object to be removed according to any one of claims 1 to 6, wherein the liquefied fluid (X) is liquid nitrogen.

8. The method for removing an object to be removed according to any one of claims 1 to 7, wherein the liquefied fluid (X) is sprayed onto the remaining object (12) such that the remaining object (12) remains.

## Patentansprüche

1. Verfahren zum Entfernen eines zu entfernenden Objekts, bei dem ein zu entfernendes Objekt (11) von einer Struktur (10) entfernt wird, die das zu entfernende Objekt (11) aus einem Material mit einer porösen Struktur, durch die eine Flüssigkeit eindringen kann, und ein verbleibendes Objekt (12) aus einem Material ohne poröse Struktur, durch welche die Flüssigkeit eindringen kann, und das mit dem zu entfernenden Objekt (11) vereinigt ist, einschließt, wobei das Verfahren zum Entfernen eines zu entfernenden Objekts umfasst:
Sprühen eines verflüssigten Fluids (X), das nach dem Sprühen auf das zu entfernende Objekt (11) verdampft und sich ausdehnt, um zu bewirken, dass das verflüssigte Fluid (X) in die poröse Struktur des zu entfernenden Objekts (11) eintritt,
**dadurch gekennzeichnet, dass**
ein Sprühstrahl und eine Sprühposition des verflüssigten Fluids (X) beibehalten werden, bis das verflüssigte Fluid (X), das in die poröse Struktur des zu entfernenden Objekts (11) eingetreten ist, verdampft, nachdem das verflüssigte Fluid (X) auf das zu entfernende Objekt (11) gesprüht worden ist, ein von Neuem aufgesprühtes verflüssigtes Fluid (X) Öffnungen der porösen Struktur verschließt und, wenn das verflüssigte Fluid (X) innerhalb der porösen Struktur verdampft, eine Ausdehnungskraft auf innere Oberflächen der porösen Struktur einwirkt, wodurch sie die poröse Struktur und einen Teil des zu entfernenden Objekts (11) in der Nähe derselben aufbricht.

2. Verfahren zum Entfernen eines zu entfernenden Objekts nach Anspruch 1, wobei das verflüssigte Fluid (X) gesprüht wird, um das Bohren des zu entfernenden Objekts (11) zu befördern, und, nachdem das verbleibende Objekt (12) freigelegt ist, eine Sprührichtung des verflüssigten Fluids (X) geändert wird, um das verbleibende Objekt (12) zu vermeiden.

3. Verfahren zum Entfernen eines zu entfernenden Objekts nach Anspruch 1 oder 2, wobei das verflüssigte Fluid (X) durch eine Düseneinheit (6, 6A, 6B, 6S) gesprüht wird, die einen Rohrabschnitt (6b) einschließt, wobei der Rohrabschnitt (6b) mit einem Strömungsweg (R), der das verflüssigte Fluid (X) darin leitet, und einer Sprühöffnung (6d1) an einem Spitzenabschnitt (62) desselben versehen ist.

4. Verfahren zum Entfernen eines zu entfernenden Objekts nach Anspruch 3, wobei der mit der Sprühöffnung (6d1) versehene Spitzenabschnitt (62) gebogen oder gekrümmt und mit einem Basisabschnitt (61) des Rohrabschnitts (6b) verbunden ist und ein Bereich des Rohrabschnitts (6b), der den Spitzenabschnitt (62) und den Basisabschnitt (61) einschließt, mit dem Strömungsweg (R) versehen ist, der das verflüssigte Fluid (X) leitet.

5. Verfahren zum Entfernen eines zu entfernenden Objekts nach einem der Ansprüche 1 bis 4, wobei das zu entfernende Objekt (11) ein Betonmaterial ist.

6. Verfahren zum Entfernen eines zu entfernenden Objekts nach einem der Ansprüche 1 bis 4, wobei das zu entfernende Objekt (11) ein faserverstärktes Kunststoffmaterial ist.

7. Verfahren zum Entfernen eines zu entfernenden Objekts nach einem der Ansprüche 1 bis 6, wobei das verflüssigte Fluid (X) flüssiger Stickstoff ist.

8. Verfahren zum Entfernen eines zu entfernenden Objekts nach einem der Ansprüche 1 bis 7, wobei das verflüssigte Fluid (X) auf das verbleibende Objekt (12) gesprüht wird, sodass das verbleibende Objekt (12) zurückbleibt.

## Revendications

1. Procédé de retrait d'un objet à retirer, dans lequel un objet à retirer (11) est retiré d'une structure (10) incluant l'objet à retirer (11) constitué d'un matériau ayant une structure poreuse à travers laquelle un liquide peut pénétrer, et un objet restant (12) constitué d'un matériau n'ayant aucune structure poreuse à travers laquelle le liquide pourrait entrer et allié à l'objet à retirer (11), le procédé de retrait d'un objet à retirer comprenant :
la pulvérisation d'un fluide liquéfié (X) qui se vaporise et s'étend après pulvérisation sur l'objet à retirer (11) de façon à faire pénétrer le fluide liquéfié (X) dans la structure poreuse de l'objet à retirer (11),
**caractérisé en ce que**
une pulvérisation et une position de pulvérisation du fluide liquéfié (X) sont maintenues jusqu'à ce que le fluide liquéfié (X) qui a pénétré dans la structure poreuse de l'objet à retirer (11) se vaporise une fois que le fluide liquéfié (X) est pulvérisé sur l'objet à retirer (11), un fluide liquéfié (X) nouvellement pulvérisé obture des orifices de la structure poreuse, et, lorsque le fluide liquéfié (X) se vaporise à l'intérieur de la structure poreuse, une force d'expansion est appliquée sur des surfaces intérieures de la structure poreuse, cassant ainsi la structure poreuse et une partie de l'objet à retirer (11) au voisinage de celle-ci.

2. Procédé de retrait d'un objet à retirer selon la revendication 1, dans lequel le fluide liquéfié (X) est pulvérisé pour faire avancer le perçage de l'objet à retirer (11), et une fois que l'objet restant (12) est exposé, une direction de pulvérisation du fluide liquéfié (X) est modifiée de sorte à éviter l'objet restant (12).

3. Procédé de retrait d'un objet à retirer selon la revendication 1 ou 2, dans lequel le fluide liquéfié (X) est pulvérisé à travers une unité de buse (6, 6A, 6B, 6S) incluant une partie de tubulure (6b), la partie de tubulure (6b) étant dotée d'un trajet d'écoulement (R) qui guide le fluide liquéfié (X) à l'intérieur de celle-ci et d'un orifice de pulvérisation (6d1) à une partie de pointe (62) de celle-ci.

4. Procédé de retrait d'un objet à retirer selon la revendication 3, dans lequel la partie de pointe (62) dotée de l'orifice de pulvérisation (6d1) est coudée ou courbée et reliée à une partie de base (61) de la partie de tubulure (6b), et une région de la partie de tubulure (6b) incluant la partie de pointe (62) et la partie de base (61) est dotée du trajet d'écoulement (R) qui guide le fluide liquéfié (X).

5. Procédé de retrait d'un objet à retirer selon l'une quelconque des revendications 1 à 4, dans lequel l'objet à retirer (11) est un matériau en béton.

6. Procédé de retrait d'un objet à retirer selon l'une quelconque des revendications 1 à 4, dans lequel l'objet à retirer (11) est un matériau plastique renforcé par des fibres.

7. Procédé de retrait d'un objet à retirer selon l'une quelconque des revendications 1 à 6, dans lequel le fluide liquéfié (X) est de l'azote liquide.

8. Procédé de retrait d'un objet à retirer selon l'une quelconque des revendications 1 à 7, dans lequel le fluide liquéfié (X) est pulvérisé sur l'objet restant (12) de sorte à ce que l'objet restant (12) demeure.
